# FASCICULE DE BREVET EUROPEEN

(11) **EP 2 847 535 B1**
(45) Date de publication et mention de la délivrance du brevet: **01.03.2017**
(21) Numéro de dépôt: 13724192.3
(22) Date de dépôt: 06.05.2013
(51) Int. Cl.: F28D 20/00

(54) **RÉSERVOIR DE STOCKAGE DE CHALEUR A STRATIFICATION THERMIQUE AMÉLIORÉE**
WÄRMESPEICHERBEHÄLTER MIT VERBESSERTER WÄRMEAUSBREITUNG
HEAT STORAGE TANK WITH IMPROVED THERMAL STRATIFICATION

(30) Priorité: 09.05.2012 FR 1254229
(43) Date de publication de la demande: 18.03.2015
(73) Titulaire: Commissariat à l'Énergie Atomique et aux Énergies Alternatives, 75015 Paris (FR)
(72) Inventeur: BRUCH, Arnaud, F-69560 Sainte Colombe Les Vienne (FR); COUTURIER, Raphaël, F-38360 Sassenage (FR); FOURMIGUE, Jean-François, F-38600 Fontaine (FR)
(74) Mandataire: Brevalex
(86) Numéro de dépôt international: PCT/EP2013/059400
(87) Numéro de publication internationale: WO 2013/167538

(56) Documents cités:
- FR-A1- 2 369 507
- US-A- 4 405 010
- US-A1- 2008 066 736
- US-A1- 2011 108 020
- FRICKER H W: "HIGH-TEMPERATURE HEAT STORAGE USING NATURAL ROCK", SOLAR ENERGY MATERIALS, ELSEVIER SCIENCE PUBLISHERS B.V. AMSTERDAM, NL, vol. 24, no. 1 / 04, 2 décembre 1991 (1991-12-02), pages 249-254, XP000257311, DOI: 10.1016/0165-1633(91)90065-S

## Description

### DOMAINE TECHNIQUE ET ART ANTÉRIEUR

La présente invention se rapporte à un réservoir de stockage de chaleur à stratification thermique améliorée conforme au préambule de la revendication 1. FR 2 369 507 divulgue un tel réservoir.

De nombreux domaines et de nombreuses applications industrielles mettent en oeuvre le stockage de chaleur. Le stockage de la chaleur permet la valorisation de la chaleur issue de processus industriels, la récupération d'énergie excédentaire ou le découplage entre le moment de production d'énergie thermique et son utilisation.

A titre d'exemple, dans le domaine du solaire thermique à concentration (CSP pour "Concentrated Solar Power" en terminologie anglo-saxonne), l'excédent de chaleur produit aux heures à fort ensoleillement peut ainsi être stocké pour être exploité en fin de journée.

Le stockage de la chaleur peut être typiquement réalisé soit sous forme d'énergie sensible (en faisant varier le niveau de température d'un matériau de stockage solide ou liquide), sous forme d'énergie latente (en faisant changer de phase un matériau de stockage) ou enfin sous forme d'énergie chimique (en utilisant des réactions chimiques endothermiques et exothermiques).

Dans le cas d'un stockage de chaleur par chaleur sensible, la chaleur est stockée par élévation de la température d'un matériau de stockage qui peut être liquide, solide ou une combinaison des deux.

Les procédés industriels impliquant une utilisation ou une conversion de l'énergie thermique au moyen d'un cycle thermodynamique, par exemple par l'utilisation d'une turbine à vapeur, font globalement intervenir deux niveaux de température qui sont les conditions aux bornes du cycle. Le maintien de ces deux niveaux de température le plus constants possibles est recherché afin d'obtenir un fonctionnement optimisé du cycle. En effet, à titre d'exemple, les turbines à vapeur qui assurent la conversion de l'énergie thermique en énergie électrique ont un rendement plus élevé lorsque la température d'entrée dans la turbine est maintenue constante à une valeur prédéfinie. Par conséquent, le stockage associé à de tels systèmes doit donc respecter ces caractéristiques et permettre par exemple de déstocker de la chaleur à un niveau de température constant.

Un exemple de ce type de fonctionnement est le domaine du solaire thermique à concentration où un système de stockage typique est constitué de deux réservoirs remplis de fluide de stockage à deux niveaux de température. Un des réservoirs stocke à une température basse constante et le second réservoir stockage à une température haute constante. La température de sortie du réservoir chaud est donc constante tout au long du déstockage.

Il existe également des systèmes ne comportant qu'un seul réservoir contenant à la fois le fluide chaud et le fluide froid. Il existe alors une stratification thermique au sein du réservoir, le fluide chaud situé en partie supérieure et le fluide froid situé en partie inférieure sont alors séparés par une région de transition appelée « thermocline ».

L'utilisation d'un réservoir unique permet de réduire le nombre de composants, tels que les pompes, vannes etc. et de simplifier le contrôle commande.

Dans un stockage de type thermocline, le matériau de stockage peut être un liquide caloporteur ou, avantageusement, un mélange d'un fluide caloporteur et d'un matériau solide bon marché. L'utilisation d'un tel matériau solide permet de plus d'améliorer la ségrégation du fluide chaud et du fluide froid en diminuant les effets de remélange. Dans ce dernier cas, on parle alors de « thermocline dual » (ou « mixed-media thermocline »).

Ce réservoir "thermocline dual" présente l'avantage de réduire la quantité de liquide nécessaire, sachant que les matériaux solides type roches sont bon marché, le coût total est réduit.

Dans un réservoir thermocline, afin de tenir compte des différences de masse volumique et éviter des mouvements de convection naturelle, le fluide caloporteur est introduit par le haut du réservoir lors de phases de stockage et par le bas du réservoir lors des phases de déstockage. Le stockage est donc caractérisé par une zone chaude en haut de la cuve, une zone froide en bas et une zone de transition entre les deux zones appelée thermocline. Le principe de ce type de stockage de chaleur est de créer un « piston thermique », c'est-à-dire l'avancée d'un front thermique le plus mince possible et uniforme transversalement. Ceci permet de maintenir des températures constantes lors des phases de charge et de décharge.

Lors des phases de charge, le liquide froid est retiré du réservoir par le bas et est échauffé, par exemple en traversant un échangeur thermique d'un collecteur solaire, et ensuite renvoyé dans le réservoir par le haut. Lors d'une phase de décharge, le liquide chaud est retiré du réservoir par le haut, et est envoyé par exemple vers l'évaporateur d'un cycle thermodynamique intégrant une turbine, dans lequel il est refroidi et est ensuite renvoyé dans le réservoir par le bas. Lors des phases de charge et de décharge le piston thermique se déplace vers le bas et vers le haut respectivement.

Le stockage de type "thermocline dual" basé sur un mélange de fluide caloporteur liquide et de matrice solide met en jeu des vitesses de fluides très faibles de l'ordre de quelques mm/s afin d'assurer le transfert de chaleur entre le fluide et la charge statique et de limiter les inhomogénéités.

Les réservoirs thermocline utilisant un mélange d'un fluide caloporteur liquide et d'une matrice solide sont soumis au problème du « thermal ratcheting » : lors des phases de chauffe, la cuve se dilate et la matrice solide descend pour occuper l'espace libéré. Lors de phases de refroidissement, la cuve se contracte et est contrainte par le lit de roches tassé. Le dimensionnement d'une cuve pour un stockage thermocline dual doit donc trouver un équilibre entre :
- la tenue mécanique liée au thermal ratcheting qui oriente vers des géométries plutôt plates, i.e. un grand diamètre de réservoir et une faible hauteur du réservoir afin de diminuer le rapport hauteur sur diamètre ;
- l'hydraulique qui oriente vers des géométries de type cigare, i.e. faible diamètre et hauteur élevée de réservoir, afin de favoriser une distribution homogène de fluide caloporteur et de garder un piston thermique mince et transversalement uniforme.

En fonctionnement réel, un tel système de stockage présente des inhomogénéités et le piston thermique n'est pas parfait. Ces inhomogénéités peuvent provenir :
- d'inhomogénéités dans la répartition de la charge statique qui peuvent être liées au remplissage initial du réservoir de stockage (mélange inhomogène, ségrégation de la roche et du sable etc.) ou au cyclage thermique de la matrice solide qui « vit » au fil des dilatations et contractions thermiques du réservoir ;
- d'effets de bord au niveau de la paroi du réservoir. Ces effets de bords sont d'ordre hydrauliques, puisque la paroi induit une inhomogénéité de la charge statique, et d'ordre thermiques en raison d'une paroi froide au contact du fluide chaud en phase de charge et d'une paroi chaude au contact du fluide froid en phase de décharge ;
- d'une mauvaise distribution du fluide caloporteur dans la charge statique.

Ces inhomogénéités conduisent à l'apparition de chemins préférentiels, à des effets cheminée qui dégradent le fonctionnement en piston thermique et limitent le bon fonctionnement du thermocline. En phase de charge, on peut ainsi arriver à des « langues » chaudes avançant dans le fluide froid. Une forte disparité de température apparaît alors dans un plan transversal du réservoir. Ceci induit, par exemple, que la température de sortie du réservoir lors d'une phase de décharge est constante sur une plage de temps plus faible, ce qui n'est pas souhaité pour l'organe de conversion thermodynamique.

### EXPOSÉ DE L'INVENTION

C'est par conséquent un but de la présente invention d'offrir un réservoir de stockage de chaleur de type "thermocline dual" présentant une distribution transversale de température homogène, de sorte à atteindre des valeurs très stables de température chaude et de température froide.

Le but de la présente invention est atteint par un réservoir conforme à la revendication 1, en particulier, un réservoir comportant une matrice solide et un caloporteur liquide répartis dans plusieurs étages en communication fluidique, chaque étage comportant une couche de matrice solide, les couches de matrice solide de deux étages consécutifs étant séparées par une couche de caloporteur liquide dans laquelle apparaissent des mouvements de convection naturelle en cas d'inhomogénéité de température dans un plan transversal. Ces mouvements de convection naturelle assurent une homogénéisation de la température, ce qui permet de rétablir une homogénéité de température transversal dans les lits de matrice solide.

A titre d'exemple, en phase de charge, dans chaque étage, le front thermique en progressant dans la couche de matrice solide du haut vers le bas du réservoir voit apparaître des inhomogénéités transversales de température. Lorsque le front thermique rencontre la couche de liquide caloporteur de l'étage inférieur, du fait des mouvements de convection naturelle, il voit ces inhomogénéités transversales atténuées. Ainsi à chaque passage d'une étape à l'autre, les inhomogénéités transversales de températures sont atténuées, cela permet de maintenir un piston thermique.

En d'autres termes, le réservoir de stockage est compartimenté sur sa hauteur au moyen d'éléments aptes à laisser circuler le liquide, afin de créer sous chaque élément des zones purement liquides au dessus des zones solides de matériau de stockage thermique. De par les très faibles vitesses de fluide et une charge statique solide, les zones liquides ainsi créées permettent de réduire les inhomogénéités par des mécanismes de convection naturelle et ainsi de «réinitialiser» le piston thermique à chaque passage d'un compartiment à l'autre.

Les éléments délimitant les compartiments sont par exemples des grilles.

De manière préférentielle, les zones solides comportent des éléments d'au moins deux granulométries, permettant de réduire les espaces vides de la matrice solide et donc la quantité de liquide caloporteur nécessaire.

Le phénomène de "thermal ratcheting" est avantageusement réduit, puisque chaque compartiment présente une hauteur faible par rapport à son diamètre tout en assurant un piston thermique transversalement uniforme puisque le réservoir présente une grande hauteur par rapport à son diamètre.

La présente invention a alors pour objet un réservoir de stockage de chaleur comportant une enveloppe d'axe longitudinal remplie d'un liquide caloporteur et d'éléments solides de stockage thermique, une première extrémité longitudinale munie de premiers moyens de collecte et d'alimentation en un liquide à une première température et une deuxième extrémité longitudinale munie de deuxièmes moyens de collecte et d'alimentation en un liquide à une deuxième température, dans lequel lesdits éléments solides de stockage thermique sont répartis en au moins deux lits superposés le long de l'axe longitudinal, séparés par une couche de liquide caloporteur, le liquide caloporteur étant apte à circuler entre la première extrémité longitudinale et la deuxième extrémité longitudinale. Par exemple, chaque lit repose sur un support permettant la communication fluidique.

Au moins l'un des supports peut comporter une structure porteuse et un caillebotis recouvert d'une voile métallique.

Les supports sont de préférence en deux parties.

Les éléments solides de stockage thermiques présentent avantageusement au moins deux granulométries différentes.

La couche de liquide caloporteur a de préférence une épaisseur comprise entre 1 cm et 10 cm.

Par exemple, l'enveloppe est une virole et la hauteur de chaque lit est inférieure au diamètre de l'enveloppe.

Les éléments solides de stockage thermique peuvent comporter des blocs de roches et du sable. Les blocs de roche sont formés par exemple à partir de roches alluvionnaires. Le liquide caloporteur est par exemple une huile thermique.

Les premiers et/ou les deuxièmes moyens de collecte et d'alimentation comportent avantageusement des moyens de distribution assurant une homogénéité transversale de la vitesse axiale du fluide.

L'enveloppe peut être une virole. Les deuxièmes moyens de distribution peuvent comportent un conduit d'alimentation s'étendant suivant le diamètre de la virole et des conduits de distribution s'étendant latéralement du conduit d'alimentation, lesdits conduits de distribution étant munis d'orifices répartis le long de leur longueur. Avantageusement, les conduits de distribution présentent des longueurs différentes de sorte que le contour des moyens de distribution est sensiblement la forme d'un cercle.

Les deuxièmes moyens d'alimentation et de collecte peuvent être isolés des éléments solides de stockage thermiques.

La présente invention a également pour objet une centrale solaire comportant au moins un réservoir de chaleur selon l'invention.

La centrale solaire peut être une centrale solaire de type Fresnel ou une centrale solaire à tour.

Les premiers et les deuxièmes moyens de collecte et d'alimentation du réservoir peuvent alors connectés à une turbine.

### BRÈVE DESCRIPTION DES DESSINS

La présente invention sera mieux comprise à l'aide de la description qui va suivre et des dessins en annexes sur lesquels :
- la figure 1 est une vue en coupe longitudinale d'un exemple de réalisation d'un réservoir de stockage de chaleur selon l'invention,
- la figure 2 est une vue de détail du réservoir de la figure 1 représenté schématiquement illustrant le fonctionnement du réservoir,
- les figures 3A et 3B sont des vues de dessus d'un exemple de réalisation de supports destinés à délimiter les compartiments dans le réservoir,
- la figure 3C est une vue en coupe suivant le plan A-A de la figure 3A,
- la figure 4 est une vue de dessus d'un exemple de réalisation d'un distributeur pouvant être mis en oeuvre dans le réservoir selon l'invention,
- la figure 5A est une vue en coupe longitudinale schématique d'un réservoir selon l'invention sur laquelle sont représentés des plans de mesure de la température,
- les figures 5B et 5C sont des vues en coupe transversales de la répartition de thermocouples dans le liquide caloporteur et dans les différents plans du lit solide respectivement,
- les figures 6A à 6D sont des représentations graphiques des mesures de températures fournies par les thermocouples dans les différents niveaux des différents étages du réservoir de la figure 5A.

### EXPOSÉ DÉTAILLÉ DE MODES DE RÉALISATION PARTICULIERS

Dans la description qui va suivre, les termes "étage" ou "compartiment" seront utilisés indistinctement.

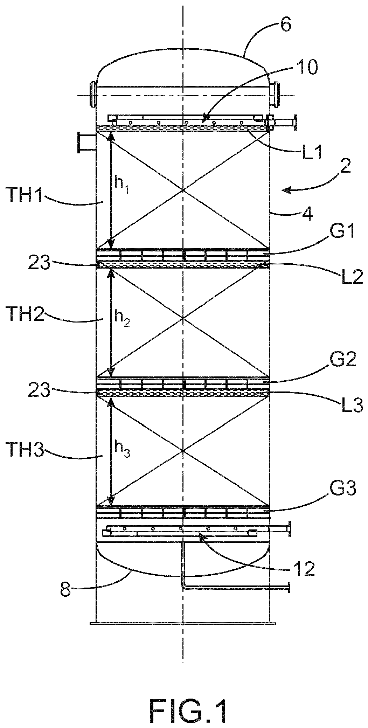

Les termes "inférieur", "supérieur", "haut" et "bas" sont considérés par rapport à l'orientation du réservoir sur la figure 1.

Sur la figure 1, on peut voir une vue en coupe longitudinale d'un exemple de réservoir de stockage de chaleur selon l'invention.

Le réservoir comporte une enveloppe 2 cylindrique d'axe longitudinal X. Dans l'exemple représenté, le réservoir présente une section circulaire.

L'axe longitudinal X est destiné à être orienté sensiblement verticalement comme dans la représentation de la figure 1.

L'enveloppe 2 est formée d'une virole 4 et de deux fonds bombés 6, 8 fermant les extrémités longitudinales supérieure et inférieure respectivement de la virole 4.

Le réservoir comporte des moyens d'admission et de collecte 10 de liquide chaud situés dans le fond bombé supérieur 6 du réservoir et des moyens d'admission et de collecte 12 du liquide froid situés dans le fond bombé inférieur 8 en partie basse du réservoir.

L'intérieur du réservoir est divisé en plusieurs compartiments C1, C2, C3 se superposant le long de l'axe longitudinal X. Chaque compartiment C1, C2, C3 comporte un fond G1, G2, G3 formant support assurant la retenue d'éléments de stockage thermiques solides tout en permettant la communication fluidique entre les compartiments et un lit TH1, TH2, TH3 d'éléments solides de stockage thermique. Seul le lit TH1 est représenté par des éléments solides.

En outre, une couche de liquide caloporteur L1, L2, L3 recouvrent les lits TH1, TH2, TH3 d'éléments de stockage thermiques solides.

Le volume utile du réservoir ne comporte pas de zone de vide, si bien que le volume non occupé par les éléments solides est rempli par le fluide caloporteur. La zone située au dessus du lit TH1 et délimitée par le fond bombé 6 n'est pas rempli de liquide et forme un ciel pour l'évacuation des vapeurs.

Dans l'exemple représenté, la zone située sous le lit TH3 délimité par le fond bombé inférieur 8 est rempli de liquide d'un matériau solide, par exemple de type béton. Ceci permet de plus de diminuer la quantité de fluide caloporteur mise en oeuvre.

Les éléments de stockage thermique sont formés par exemple par des roches et/ou du sable. De préférence, les éléments présentent au moins deux granulométries assurant ainsi un bon remplissage et réduisant les espaces libres pour le liquide caloporteur. Avantageusement, les éléments de stockage thermique solides sont formés par des blocs de roches et du sable remplissant les espaces entre les roches.

Chaque granulométrie correspond à un diamètre d50 d'éléments solides, défini comme la valeur pour laquelle 50 % des éléments solides ont un diamètre inférieur à d50. Le diamètre d50 est désigné également la médiane.

De préférence, un facteur 10 entre les médianes des deux granulométries est choisi ce qui permet le remplissage de l'espace libre entre les grosses roches par les petites roches. Par exemple, les grosses roches ont un diamètre d'environ 3 cm et les petites roches ont un diamètre d'environ 3 mm. La répartition en volume est la suivante : environ 75% de grosses roches et 25% de petites roches en volume.

Il peut s'agir par exemple de roches alluvionnaires composées principalement de silice. Les roches sont choisies en fonction de leurs caractéristiques liées à la capacité de stockage thermique et à leur comportement thermique (masse volumique, capacité thermique massique et conductivité thermique) et à leur compatibilité avec le liquide caloporteur, par exemple la compatibilité entre la nature géologique de la roche et du liquide caloporteur.

Le liquide caloporteur est par exemple de l'huile ou des sels fondus. Par exemple, l'huile peut être du Therminol66 ^{®} ou Jarytherm DBT ^{®}, celle-ci ne montrant pas d'interactions particulières avec les roches alluvionnaires, de manière plus générale les huiles thermiques de synthèse haute température peuvent convenir en utilisation avec les roches alluvionnaires.

A des fins de simplicité les "lits d'éléments de stockage thermique solides" seront désignés par la suite "lit de stockage thermique".

Les supports sont donc adaptés pour supporter mécaniquement les lits de stockage thermique, pour retenir les éléments de faible granulométrie, tels que le sable et à laisser passer le liquide caloporteur.

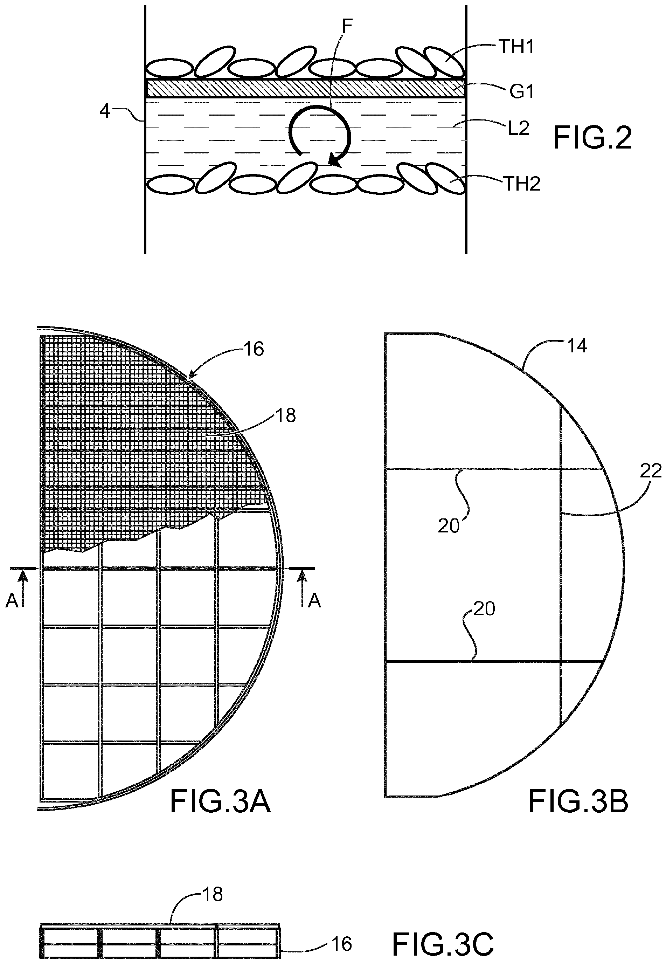

Sur les figures 3A à 3C, ont peut voir des détails d'un support F1 selon un exemple de réalisation.

De manière avantageuse le support G1 est formé de deux demi-supports facilitant son montage dans la virole 4. Un support en une seule pièce ne sort pas du cadre de la présente invention.

Sur les figures 3A et 3B, on peut un voir une structure porteuse 14 en forme de demi-disque, et un caillebotis 16 en forme de demi-disque recouvert d'une grille 18 reposant sur la structure porteuse 14.

La structure porteuse 14 est formée par des barres porteuses parallèles 20 solidarisées entre elles par des traverses 22 et réalisant une structure en forme de demi-cercle.

Sur la figure 3C, on peut voir une vue en coupe selon le plan A-A de la figure 3A du caillebotis 16 et de la grille 18.

La grille 18 est par exemple formée par une toile métallique dont la taille des mailles est telle qu'elle assure la retenue des éléments solides de plus faibles granulométries.

Chaque support G1, G2, G3 est suspendu dans la virole par l'intermédiaire d'un taquet annulaire 23 bordant la surface intérieure de la virole à la hauteur souhaitée.

Les moyens d'admission et de collecte 10, 12 comportent de préférence un orifice pour collecter le fluide chaud et froid respectivement et des moyens de distribution pour alimenter le réservoir en fluide chaud et froid respectivement.

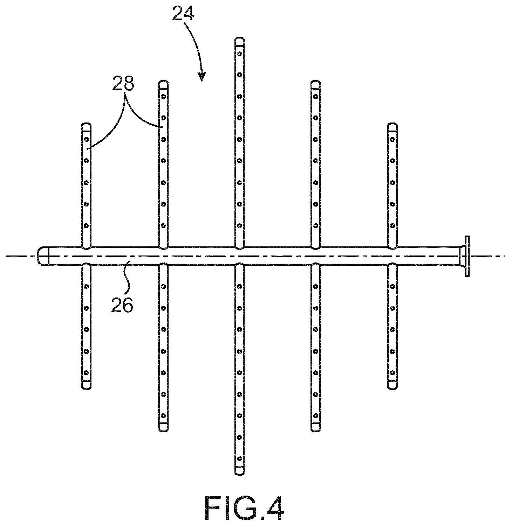

Sur la figure 4, on peut voir un exemple de réalisation avantageux de moyens de distribution vus de dessus.

Les moyens de distribution 24 comportent un conduit d'alimentation 26 relié à l'alimentation en liquide extérieur et des conduits de distribution 28 connectés au conduit d'alimentation et s'étendant transversalement par rapport à celui-ci. Dans l'exemple représenté, les conduits de distribution 28 sont perpendiculaires au conduit d'alimentation 26. Chaque conduit est muni d'une pluralité d'orifices de distribution assurant une distribution du liquide le long de son axe.

Le conduit principal s'étend avantageusement le long d'un diamètre de la virole. De manière avantageuse également les conduits de distribution présentent des longueurs différentes en fonction de leur position le long du conduit principal de sorte que les moyens de distribution couvrent de manière sensiblement homogène toute la section transversale de la virole.

D'autres formes de moyens de distribution peuvent être envisagées, de préférence ces formes assurant une répartition homogène des liquides alimentant le réservoir.

Sur la figure 2, on peut voir représentées schématiquement une partie supérieure d'un compartiment C2 et une partie inférieure du compartiment C1.

On peut voir la couche de liquide L2 au dessus du lit de stockage thermique TH2 et au dessous du support G1 qui est recouvert du lit de stockage thermique TH1.

La flèche F symbolise les mouvements de convection naturelle qui apparaissent dans la couche de liquide L2 lorsqu'elle est le lieu d'inhomogénéités transversales de température.

En cas d'inhomogénéités transversales de température, des gradients de température et donc des gradients de masse volumique de liquide apparaissent dans les couches liquides, ce qui conduit à l'apparition de mouvements de convection naturelle qui tendent à réduire ce gradient.

De préférence, l'épaisseur des couches de liquide est de l'ordre de 1 cm à 10 cm.

Il a été constaté que pour des épaisseurs inférieures à 1 cm, la fonction de remélange global est moins bien assurée car les cellules de convection qui se créent ont un effet plus local.

Pour des épaisseurs supérieures à 10 cm, l'efficacité de la fonction de remélange est conservée. En revanche, plus l'épaisseur de la couche de liquide caloporteur est grande plus la quantité de liquide est importante. Or le coût du liquide est élevé. Il en résulte qu'un réservoir avec des couches liquides présentant une épaisseur importante est économiquement moins intéressant. De plus, des épaisseurs trop importantes de couches liquides se traduiraient par un remélange axial trop important qui réduirait l'efficacité du thermocline.

De manière avantageuse, les compartiments présentent tous sensiblement la même hauteur et la même composition en quantité de liquide et en quantité d'éléments solides de sorte à assurer un comportement homogène sur toute la hauteur du réservoir.

La hauteur du réservoir de stockage est donc « découpée » en plusieurs régions de hauteur hi : h1, h2, h3 qui peuvent varier de quelques dizaines de centimètres à quelques mètres. La hauteur des lits est en pratique choisie de sorte à conserver un rapport hi/D<1, ce qui permet de réduite le phénomène mécanique de thermal ratcheting.

A titre d'exemple uniquement, un réservoir présentant une température basse de 150°C et une température haute de 300°C, peut comporter une virole présentant un diamètre de 2500 mm, trois compartiments comprenant chacun un lit de stockage thermique de hauteur égale à 1900 mm et d'une couche de liquide caloporteur ayant une épaisseur de 100 mm.

Nous allons maintenant montrer l'efficacité de la structure du réservoir selon l'invention.

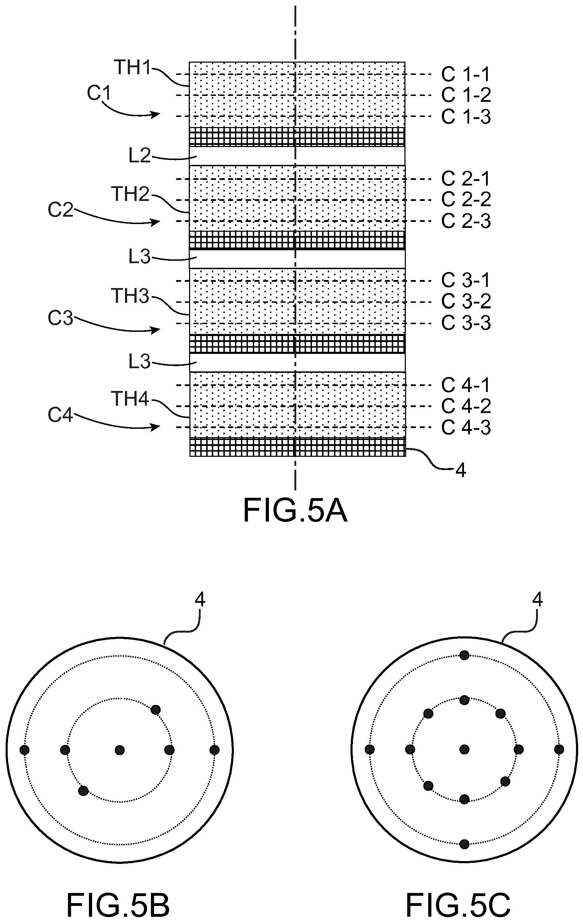

Pour cela, on considère un réservoir à quatre compartiments. Des mesures de température sont effectuées dans les couches de liquide L1 à L3 et à différentes hauteurs dans chaque lit de stockage thermique TH1, TH2, TH3, TH4 et en plusieurs points de plans transversaux de chaque lit correspondant aux différentes hauteurs. Les différentes hauteurs de mesure sont représentées sur la figure 5A. Les différents points de mesure par hauteur sont représentés sur la coupe de la figure 5C pour les roches et sur la coupe de la figure 5B pour le liquide. Les mesures sont faites au moyen de thermocouples.

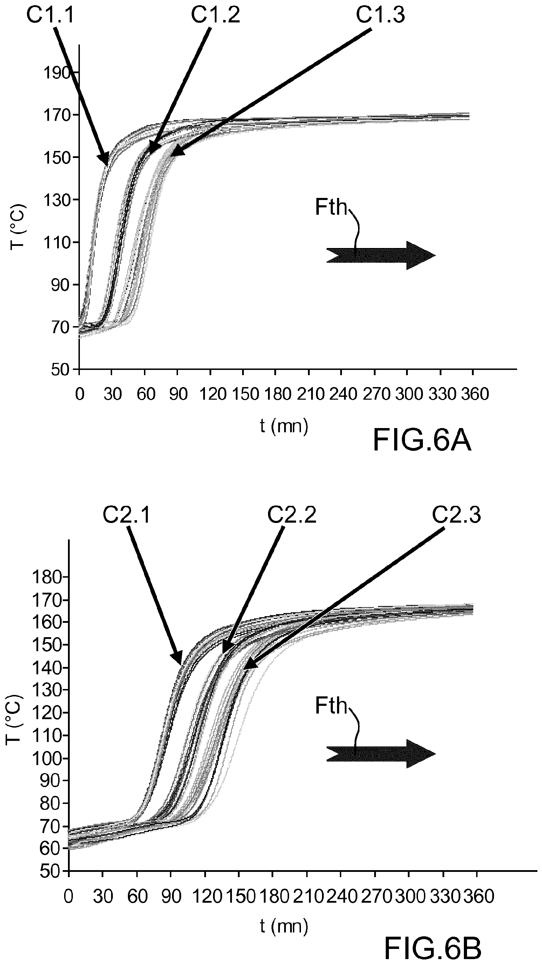

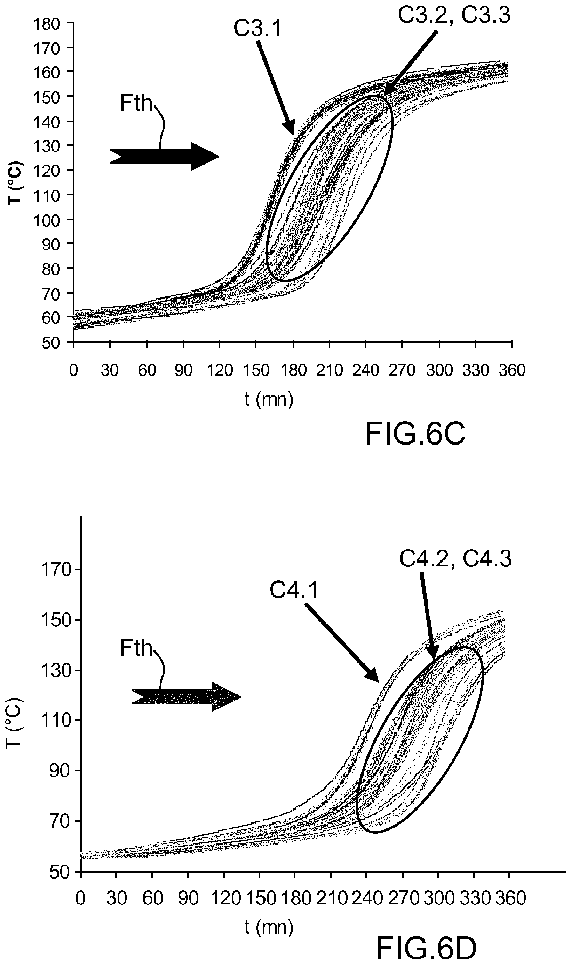

Les mesures sont représentées sur les graphiques des figures 6A à 6D pour chacun des compartiments C1 à C4 respectivement.

La charge est réalisée à la température de 170°C et le réservoir est initialement entièrement à la température de 60°C.

L'avancée du front thermique est symbolisée par la flèche Fth sur les représentations graphiques.

L'analyse des mesures de température montrent que dans le compartiment supérieur C1, on distingue trois groupes de courbes correspondant au plan C1-3, au plan C1-2 et au plan C1-1. Au fur et à mesure que le front thermique progresse dans la virole le long de l'axe X, une inhomogénéité en température apparait : en effet on constate que les courbes sont de moins en moins groupées, ce qui traduit l'existence d'écarts de température entre des points de mesure situés sur un même plan. L'inhomogénéité de la température croît ainsi du plan C1-1 vers le plan C1-3.

Le passage du compartiment C1 au compartiment 2 se traduit par un resserrement des courbes dans le plan C2-1 par rapport à celles du plan C1-3 (figure 6A), ce qui signifie une diminution de l'inhomogénéité de la température dans le plan C2-1 par rapport à le plan C1-3.

Le passage par la couche liquide L2 entre les lits TH1 et TH2 permet de réduire l'étalement du groupe de courbes, c'est-à-dire de réduire l'inhomogénéité en température.

Le même phénomène apparaît à chacun des passages d'un compartiment à l'autre lors de la traversée d'une couche liquide.

Dans les compartiments C3 et C4, on observe seulement deux groupes de courbes : un premier groupe bien resserré correspondant aux plans C3-1 et C4-1 et un groupe de courbes étalées correspondants aux deux nappes suivantes de mesure C3-2 et C3-3 et C4-2 et C4-3. Ceci illustre une inhomogénéité dans le réservoir due au lit de roches. Toutefois, le passage par la couche liquide L4 permet de rétablir l'homogénéité en température.

Dans un réservoir selon l'invention, la réduction des inhomogénéités en température lors du passage par une couche uniquement liquide a été observée expérimentalement même en cas d'inhomogénéité forte de la température dans un plan situé en amont de la couche liquide. La couche de liquide permet également de retarder la déstabilisation du thermocline puisque la dispersion en température sur les plans C2-1, C3-1 et C4-1 est plus faible que sur le plan C1-3.

Le réservoir présente alors un fonctionnement amélioré qui se rapproche du fonctionnement en piston thermique. Le réservoir selon l'invention aide donc à maintenir une température constante en sortie du réservoir.

De plus la proportion utile du réservoir est augmentée. En effet, La réduction des inhomogénéités transversales en température permet d'obtenir un pourcentage de volume plus important du réservoir à température constante.

En outre, grâce à l'invention, il est possible de combiner les avantages d'un faible rapport hauteur du lit sur diamètre de la virole et d'un rapport hauteur total sur diamètre de la virole élevé.

En effet, la segmentation du lit d'éléments solides permet d'atteindre, pour chaque compartiment, un rapport hauteur du lit de stockage thermique sur le diamètre de la virole inférieur à 1 ce qui permet de réduire l'effet de thermal ratcheting et donc d'assurer une bonne tenue mécanique. Et simultanément, la segmentation permet d'avoir une hauteur totale de lit d'élément solides importante et donc un rapport hauteur totale sur diamètre grand. On obtient donc des propriétés de stockage importantes en durée et en volume de zone isotherme.

De plus, grâce à l'invention, il est possible de réduire l'épaisseur de la virole par rapport à celles de l'état de la technique puisque la poussée liée aux matériaux solide de stockage est répartie dans les différents compartiments. En outre, le phénomène de tassement lors des cycles thermiques est réparti dans les différents compartiments.

En outre, grâce à la répartition en compartiments, les moyens de distribution situés dans le fond inférieur du réservoir sont isolés des éléments solides de stockage thermique, ils ne sont alors plus soumis aux contraintes mécaniques liées par exemple au tassement de cette matrice lors des cycles thermiques.

Le réservoir selon l'invention peut être utilisé pour stocker la chaleur de toute installation ou système produisant de la chaleur.

Il est particulièrement adapté à l'utilisation avec des systèmes utilisant des liquides présentant des températures maitrisées et constantes, tels que les turbines.

Le réservoir selon la présente invention est particulièrement adapté à une utilisation dans une centrale solaire de type Fresnel pour alimenter une turbine. Il peut également être utilisé dans une centrale solaire à tour.

## Revendications

1. Réservoir de stockage de chaleur comportant une enveloppe (2) d'axe longitudinal (X) remplie d'un liquide caloporteur et d'éléments solides de stockage thermique, une première extrémité longitudinale munie de premiers moyens de collecte et d'alimentation (10) en un liquide à une première température et une deuxième extrémité longitudinale munie de deuxièmes moyens de collecte et d'alimentation (12) en un liquide à une deuxième température, ledit réservoir étant **caractérisé en ce que** lesdits éléments solides de stockage thermique sont répartis en au moins deux lits (TH1, TH2, TH3) superposés le long de l'axe longitudinal (X), séparés par une couche de liquide caloporteur (L1, L2, L3), le liquide caloporteur étant apte à circuler entre la première extrémité longitudinale et la deuxième extrémité longitudinale.

2. Réservoir selon la revendication 1, dans lequel chaque lit (TH1, TH2, TH3) repose sur un support (G1, G2, G3) permettant la communication fluidique.

3. Réservoir selon la revendication 2, dans lequel au moins l'un des supports (G1, G2, G3) comporte une structure porteuse (14) et un caillebotis (16) recouvert d'une voile métallique (18).

4. Réservoir selon la revendication 2 ou 3, dans lequel les supports (G1, G2, G3) sont en deux parties.

5. Réservoir selon l'une des revendications 1 à 4, dans lequel les éléments solides de stockage thermique présentent au moins deux granulométries différentes.

6. Réservoir selon l'une des revendications 1 à 5, dans lequel la couche de liquide caloporteur (L1, L2, L3) a une épaisseur comprise entre 1 cm et 10 cm.

7. Réservoir selon l'une des revendications 1 à 6, dans lequel l'enveloppe (2) est une virole et dans lequel la hauteur de chaque lit (G1, G2, G3) est inférieure au diamètre de l'enveloppe (2).

8. Réservoir selon l'une des revendications 1 à 7, dans lequel le liquide caloporteur est une huile et/ou dans lequel les éléments solides de stockage thermique comportent des blocs de roche et du sable, lesdits blocs de roche étant avantageusement formés à partir de roches alluvionnaires.

9. Réservoir selon l'une des revendications 1 à 8, dans lequel les premiers (10) et/ou les deuxièmes (12) moyens de collecte et d'alimentation comportent des moyens de distribution (24) assurant une homogénéité transversale de la vitesse axiale du fluide.

10. Réservoir selon la revendication 9, dans lequel l'enveloppe (2) est une virole et les deuxièmes moyens de distribution (24) comportent un conduit d'alimentation (26) s'étendant suivant le diamètre de l'enveloppe (2) et des conduits de distribution (28) s'étendant latéralement du conduit d'alimentation, lesdits conduits de distribution (28) étant munis d'orifices répartis le long de leur longueur.

11. Réservoir selon la revendication 10, dans lequel les conduits de distribution (28) présentent des longueurs différentes de sorte que le contour des moyens de distribution (24) a sensiblement la forme d'un cercle.

12. Réservoir selon l'une des revendications 1 à 11, dans lequel les deuxièmes moyens d'alimentation et de collecte (12) sont isolés des éléments solides de stockage thermique.

13. Centrale solaire comportant au moins un réservoir de chaleur selon l'une des revendications 1 à 12.

14. Centrale solaire selon la revendication 13, dans laquelle la centrale solaire est une centrale solaire de type Fresnel ou une centrale solaire à tour.

15. Centrale solaire selon la revendication 13 ou 14, dans laquelle les premiers (10) et les deuxièmes (12) moyens de collecte et d'alimentation du réservoir sont connectés à une turbine.

## Patentansprüche

1. Wärmespeicherbehälter, enthaltend eine Hülle (2) mit Längsachse (X), die mit einer Wärmeträgerflüssigkeit und festen Wärmespeicherelementen gefüllt ist, ein erstes Längsende, das mit ersten Mitteln (10) zum Ansammeln und Versorgen mit einer Flüssigkeit mit einer ersten Temperatur versehen ist, und ein zweites Längsende, das mit zweiten Mitteln (12) zum Ansammeln und Versorgen mit einer Flüssigkeit mit einer zweiten Temperatur versehen ist, wobei der Behälter **dadurch gekennzeichnet ist, dass** die festen Wärmespeicherelemente auf zumindest zwei Betten (TH1, TH2, TH3) verteilt sind, die entlang der Längsachse (X) übereinanderliegen und durch eine flüssige Wärmeträgerschicht (L1, L2, L3) getrennt sind, wobei die Wärmeträgerflüssigkeit dazu geeignet ist, zwischen dem ersten Längsende und dem zweiten Längsende zu zirkulieren.

2. Behälter nach Anspruch 1, wobei jedes Bett (TH1, TH2, TH3) auf einem Träger (G1, G2, G3) aufliegt, der die fluidische Kommunikation gestattet.

3. Behälter nach Anspruch 2, wobei zumindest einer der Träger (G1, G2, G3) eine Tragstruktur (14) und einen Gitterrost (16) aufweist, der mit einem Metallvlies (18) bedeckt ist.

4. Behälter nach Anspruch 2 oder 3, wobei die Träger (G1, G2, G3) zweiteilig sind.

5. Behälter nach einem der Ansprüche 1 bis 4, wobei die festen Wärmespeicherelemente zumindest zwei unterschiedliche Korngrößen aufweisen.

6. Behälter nach einem der Ansprüche 1 bis 5, wobei die Schicht aus Wärmeträgerflüssigkeit (L1, L2, L3) eine Dicke zwischen 1 cm und 10 cm hat.

7. Behälter nach einem der Ansprüche 1 bis 6, wobei die Hülle (2) eine Hülse ist und die Höhe eines jeden Betts (G1, G2, G3) geringer als der Durchmesser der Hülle (2) ist.

8. Behälter nach einem der Ansprüche 1 bis 7, wobei die Wärmeträgerflüssigkeit ein Öl ist und/oder die festen Wärmespeicherelemente Felsblöcke oder Sand enthalten, wobei die Felsblöcke vorteilhaft aus Alluvionalfelsen gebildet sind.

9. Behälter nach einem der Ansprüche 1 bis 8, wobei die ersten (10) und/oder zweiten (12) Mittel zum Ansammeln und Versorgen Verteilungsmittel (24) aufweisen, die eine transversale Gleichmäßigkeit der axialen Geschwindigkeit des Fluids sicherstellen.

10. Behälter nach Anspruch 9, wobei die Hülle (2) eine Hülse ist und die zweiten Verteilungsmittel (24) eine Versorgungsleitung (26) enthalten, die sich entlang des Durchmessers der Hülle (2) erstreckt, sowie Versorgungsleitungen (28), die sich seitlich von der Versorgungsleitung erstrecken, wobei die Verteilungsleitungen (28) mit Öffnungen versehen sind, die entlang ihrer gesamten Länge verteilt sind.

11. Behälter nach Anspruch 10, wobei die Versorgungsleitungen (28) unterschiedliche Längen aufweisen, so dass die Kontur der Verteilungsmittel (24) im Wesentlichen die Form eines Kreises ist.

12. Behälter nach einem der Ansprüche 1 bis 11, wobei die zweiten Mittel zum Versorgen und Ansammeln (12) von den festen Wärmespeicherelementen getrennt sind.

13. Sonnenkraftwerk, enthaltend zumindest einen Wärmespeicherbehälter nach einem der Ansprüche 1 bis 12.

14. Sonnenkraftwerk nach Anspruch 13, wobei das Sonnenkraftwerk ein Sonnenkraftwerk vom Typ Fresnel oder eine Solarturm ist.

15. Sonnenkraftwerk nach Anspruch 13 oder 14, wobei die ersten (10) und zweiten (12) Mittel zum Ansammeln und Versorgen des Speichers mit einer Turbine verbunden sind.

## Claims

1. Heat storage tank comprising an envelope (2) with a longitudinal axis (X) filled with a heat transfer liquid and solid heat storage elements, a first longitudinal end provided with first means (10) for collecting and supplying a liquid at a first temperature and a second longitudinal end provided with seconds means (12) for collecting and supplying a liquid at a second temperature, said tank being **characterised in that** said solid heat storage elements are distributed across at least two beds (TH1, TH2, TH3) superposed along the longitudinal axis (X), separated by a layer of heat transfer liquid (L1, L2, L3), the heat transfer liquid being capable of flowing between the first longitudinal end and the second longitudinal end.

2. Tank according to claim 1, in which each bed (TH1, TH2, TH3) rests on a support (G1, G2, G3) enabling fluid communication.

3. Tank according to claim 2, in which at least one of the supports (G1, G2, G3) comprises a bearing structure (14) and a slatted structure (16) covered with a metal web plate (18).

4. Tank according to claim 2 or 3, in which the supports (G1, G2, G3) are in two parts.

5. Tank according to one of claims 1 to 4, in which the solid heat storage elements have at least two different particle sizes.

6. Tank according to one of claims 1 to 5, in which the layer of heat transfer liquid (L1, L2, L3) has a thickness comprised between 1 cm and 10 cm.

7. Tank according to one of claims 1 to 6, in which the envelope (2) is a shell and in which the height of each bed (G1, G2, G3) is less than the diameter of the envelope (2).

8. Tank according to one of claims 1 to 7, in which the heat transfer liquid is an oil or/and in which the solid heat storage elements comprise blocks of rock and sand, the blocks of rock being advantageously formed from alluvial rocks.

9. Tank according to one of claims 1 to 8, in which the first (10) and/or the second (12) collecting and supplying means comprise distribution means (24) assuring transversal homogeneity of the axial velocity of the fluid.

10. Tank according to claim 9, in which the envelope (2) is a shell and the second distribution means (24) comprise a supply duct (26) extending along the diameter of the envelope (2) and distribution ducts (28) extending laterally from the supply duct, said distribution ducts (28) being provided with orifices distributed along the length thereof.

11. Tank according to claim 10, in which the distribution ducts (28) have different lengths such that the contour of the distribution means (24) has substantially the shape of a circle.

12. Tank according to one of claims 1 to 11, in which the second supplying and collecting means (12) are isolated from the solid heat storage elements.

13. Solar power plant comprising at least one heat tank according to one of claims 1 to 12.

14. Solar power plant according to claim 13, in which the solar power plant is a Fresnel type solar power plant or a tower solar power plant.

15. Solar power plant according to claim 13 or 14, in which the first (10) and the second (12) means for collecting and supplying the tank are connected to a turbine.
